(19) Europäisches Patentamt

European Patent Office

Office européen des brevets

(11) **EP 1 063 788 A1**

(12) **EUROPEAN PATENT APPLICATION**

(43) Date of publication:
**27.12.2000 Bulletin 2000/52**

(51) Int Cl.⁷: **H04B 7/005**

(21) Application number: **99440155.2**

(22) Date of filing: **18.06.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **ALCATEL**
**75008 Paris (FR)**

(72) Inventors:
• **Cordier, Christophe**
**75017 Paris (FR)**

• **De Hoz Garcia Bellido, Alejandro**
**92100 Boulogne-Billancourt (FR)**

(74) Representative: **Scheer, Luc et al**
**ALCATEL,**
**Intellectual Property Department,**
**Postfach 300 929**
**70449 Stuttgart (DE)**

(54) **Method for determining the needed transmission power in a CDMA network**

(57) The present invention concerns a method for determining the needed transmission power for establishing a radio communication link between a transmitter unit ($E_i$) among a plurality of transmitter units (E) gathered together in several geographically spread base stations and a receiver unit ($R_j$) among a plurality of receiver units (R), with a given signal-to-interference ratio ($SIR_{Rj}$) at the receiver unit ($R_j$), wherein the transmission power ($P_t$), especially the initial transmission power ($P_{t,init}$) is calculated as follows:

$$P_t \text{ or } P_{t,init} = SIR_{Rj} \times PL \times (I_{intra} + I_{extra}) \qquad (1)$$

where:

PL is the pathloss obtained as the ratio between reported received power ($P_{Rj}$) at the receiver unit ($R_j$) and known transmitted power ($P_{ti}$) by the transmitter unit ($E_i$) ;

$I_{intra}$ is the interference power received at the receiver unit ($R_j$) from all other transmitter units ($E_{BS}$) of the base station (BS) comprising the transmitter unit ($E_i$), and,

$I_{extra}$ is the interference power received at the receiver unit ($R_j$) from the transmitter units (E) from all base stations of the network, except the base station (BS) incorporating transmitter unit ($E_i$).

EP 1 063 788 A1

**Description**

The present invention relates generally to transmission power evaluation and adjustment procedures in radio communication, in particular in cellular network communication systems, and concerns a method for determining the needed transmission power for establishing and/or maintaining a radio communication link with a given sufficient quality.

In radio communication systems including a plurality of transmitting/receiving units, some mobile and some fixed, as for instance in a CDMA system, it is in particular necessary to determine initial power to be transmitted in the downlink direction for each temporary established traffic channel, immediately after call setup, power reset or when entering a macrodiversity mode (soft handover).

The only method for adjusting initial downlink power known by the inventors consists in evaluating the transmission loss (using the mobile received power during the access procedure) and ensuring that a given received power is reached at the mobile station.

The main drawback of the preceding prior art method is that it completely ignores the interference environment experienced by the mobile station.

Now, especially in CDMA, signal quality is mainly determined by interference conditions.

Generally, it is possible to suppress most of intra-cell interference by means of orthogonal spreading sequences. However, other-cell interference cannot be mitigated and it does noticeably affect signal-to-noise ratio.

In certain locations, the link from cell site to mobile station may be unusually disadvantaged. For example, this is the case when the pathloss to one or two neighboring cells is nearly the same as the pathloss to the home cell. This situation may require additional 3-4 dB of signal power to achieve adequate performance. A pathloss-based algorithm will ignore such situations and fail to provide the additional amount of power required to overcome the external interference effect.

This inappropriate power setting will cause a momentary quality outage for this mobile station ; this outage will be compensated by the power control procedure, but only after a few iterations.

On the other hand, if a fixed margin is applied to counteract such situations, it may result in overestimating the initial power, therefore injecting unnecessary interference in the system and penalizing capacity.

Additionally, in so-called Soft Handover situations, all base-stations receive the same power control commands from the mobile station. Thus, transmit power ratios between base-stations belonging to the so-called Active Set will remain the same along communication if no other action is taken to modify them. In this context, accurate power initialization is critical.

Therefore, the main object of the present invention is to provide a method for determining more accurately, more effectively and in an environment appreciative way the downlink power, in particular the initial downlink power, while ensuring that the required SIR is systematically obtained.

The present invention thus concerns a method for determining the needed transmission power for establishing and/or maintaining a radio communication link between a transmitter unit $E_i$ among a plurality of transmitter units E gathered together in several geographically spread base stations and a receiver unit $R_j$ among a plurality of receiver units R, with a given signal-to-interference ratio $SIR_{Rj}$ at the receiver unit $R_j$, wherein the transmission power $P_t$, especially the initial transmission power $P_{t,init}$, is calculated as follows:

$$P_t \text{ or } P_{t,init} = SIR_{Rj} \times PL \times (I_{intra} + I_{extra})$$

where:

$P_L$ is the pathloss obtained as the ratio between reported received power $P_{Rj}$ at the receiver unit $R_j$ and known transmitted power $P_{ti}$ by the transmitter unit $E_i$ ;

$I_{intra}$ is the interference power received at the receiver unit $R_j$ from all other transmitter units $E_{BS}$ of the base station BS comprising the transmitter unit $E_i$, and,

$I_{extra}$ is the interference power received at the receiver unit $R_j$ from the transmitter units E from all base stations of the network, except the base station BS incorporating transmitter unit $E_i$.

As can be seen, the basic principle of the invention is to make use of the knowledge of both pathloss, internal interference and external interference to carry out power initialization or power evaluation. The proposed initialization scheme ensures that the target SIR is reached at the concerned receiver.

The solution proposed by the invention also includes a method for evaluating the total interference received at a specific receiver unit $R_j$ (able to establish communication links with at least one of a plurality of transmitter units E gathered together in several base stations BS forming a cellular radiocommunication network): $I_{tot} = I_{intra} + I_{extra}$.

Indeed, according to the invention, the interference power $I_{intra}$ may be calculated as:

$$I_{intra} = \frac{P_{tot,\,BS}}{PL} \times OF_j$$

where:

$P_{tot,\,BS}$ is the total transmitted power of all transmitter units $E_{BS}$ of the base station BS incorporating transmitter unit $E_i$;

PL is the pathloss between base station BS and receiver unit Rj, and,

$OF_j$ is the orthogonality factor seen by the receiver unit $R_j$.

The othogonality factor represents the efficiency of the receiver in suppressing the interference contributed by transmitter units $E_{BS}$.

In the same way, the interference power $I_{extra}$ may be calculated as:

$$I_{extra} = \sum_k \frac{P_{tot,\,BS_k}}{PL_{BS_k}}$$

where:

$P_{tot,\,BS_k}$ is the total transmitted power of all transmitter units E of the base stations $BS_k$ of the network other than the base station BS incorporating the transmitter unit $E_i$, and,

$PL_{BS_k}$ is the corresponding pathloss between receiver unit $R_j$ and base station $BS_k$.

In order to simplify and facilitate the power setting procedure, it may be efficient that only the base stations which are received at the receiver unit $R_j$ with at least a preset minimal power level and are thus part of a base station belonging to a so-called Candidate Set, are taken into account in order to calculate $I_{extra}$.

Preferably, the intial transmission power $P_{t,init}$, or downlink power, is calculated for each new communication link setup or modification thereof, such as momentary breakdown, change in the transmitter unit identity, etc.

The present invention addresses the power initialization problem but it can be applied whenever a transmit power evaluation is needed also during transmission (for example in replacement of the conventional fast power control loop). Hence, the proposed solution should be viewed as a generic power setting method.

Moreover, the method of the present invention can be applied to all kinds of radio communication systems comprising a plurality of receiver units and at least one or more transmitter units.

Nevertheless, according to a preferred embodiment of the invention, the transmitter units E and the receiver units R are part of a Code Division Multiple Access (CDMA) type cellular network, controlled by a Radio Network Controller (RNC), the receiver units R corresponding to the mobile stations.

In this application, the pathloss values PL can be advantageously based on $P_{Rj}$ and $P_{ti}$ power values obtained through the Broadcasting Control CHannel (BCCH).

The present invention will be better understood thanks to the following description based on a preferred embodiment explained hereinafter as a non limitative example.

In a CDMA, power initialization is carried out in the Radio Network Controller, which is in charge of call acceptance and handover execution. This entity has full visibility of power utilization in base-stations under its control. Moreover, the RNC receives various measurement reports from the mobile in the context of Mobile Assisted Access and Handover.

The mobile measures the average power received on the BCCH channel from all base-stations within reach. Based on these measurements, the mobile maintains a Candidate Set comprising all candidate base-stations for establishing a communications link.

At important stages of mobile operation (initial access, call establishment, handover attempts, ...) Candidate Set measurements (or more generally all relevant measurements) are reported to the RNC for decision making. Such messages are transported on Dedicated Physical Control Channels in the uplink. Based on the current report, the RNC is able to estimate the transmit power needed to meet quality requirements at mobile receivers according to the method described below.

Assuming that the RNC has knowledge of the pathloss (PL) between the mobile and the target base-station, and disposes of internal and external interference estimates ($I_{intra}$, $I_{extra}$) and of the target Signal-to-Interference Ratio at the mobile ($SIR_{target}$) then it is proposed to calculate the initial downlink transmit power $P_{DL,init}$ from the target base-station towards the mobile as follows:

$$P_{DL,init} = SIR_{target} \times PL \times (I_{intra} + I_{extra}) \qquad (1)$$

Target SIR is usually a parameter imposed by the RNC, possibly based on some quality measurement reported by the mobile. Target SIR setting is part of basic power control mechanisms and is a known procedure to a person skilled in the art.

Pathloss is evaluated based on the BCCH received power value for the target base-station. The RNC is cognizant of the BCCH transmit power for all base-stations. Hence, pathloss estimate is obtained from the ratio between reported received BCCH power $P_{r,BCCH}$ and known transmit power $P_{t,\,BCCH}$:

$$PL = \frac{P_{t,\,BCCH}}{P_{r,BCCH}}$$

It should be noted that the evaluated pathloss solely incorporates the effect of distance and shadowing. Fast fading effects are averaged out when assessing the average BCCH received power.

Internal interference corresponds to the contributions received at the mobile from other users in the target cell. Since communication with the mobile of interest has not been initiated yet, the internal interference to be experienced by the mobile after link establishment coincides with the total received power from the target base-station before link establishment.

Therefore, the RNC must evaluate the total received power from the target base-station BS at the mobile. To this end, the RNC utilizes its visibility on the total transmit power of all base-stations it controls. Using the total transmit power of the target base-station and knowing the pathloss, internal interference $I_{intra}$ is assessed as

$$I_{intra} = \frac{P_{tot, BS}}{PL} \times OF$$

where OF denotes the orthogonality factor seen by the mobile. This orthogonality factor describes the efficiency of the receiver in rejecting same-cell interference.

In ideal propagation conditions, Hadamard sequences would totally suppress internal interference. Because of multipath, a residual interference remains and it is precisely this contribution that appears in the SIR and which is to be estimated. At this point, it is assumed that a rough estimate of the orthogonality factor is available at the RNC (orthogonality factor is related in some way to target SIR).

If the link already exists, its contribution is already accounted for in the total transmit power of the base. Then, it will be falsely included in the internal interference, leading to a very slight overestimation of the transmit power (not penalizing at all).

External interference is the total power received by the mobile from all surrounding base-stations, including those in the Candidate Set.

As explained earlier, the Candidate Set contains all base-stations that are received at the mobile with a sufficient power level. Hence, base-stations in the Candidate Set will bring most of the external interference, and total external interference can be approximated by the aggregate of the so-called Candidate Set Interference. This interference is evaluated from Candidate Set measurement reports. As is done for the target base-station, the pathloss between the mobile and a candidate base-station ($PL_{cand}$) can be derived from BCCH measurement. Likewise, the RNC knows the total transmit power $P_{tot,cand}$ of every candidate base.

As a result, external interference $I_{extra}$ is evaluated by:

$$I_{extra} = \Sigma \frac{P_{tot, cand}}{PL_{cand}}$$

for all base stations of the Candidate Set.

Nevertheless, if measurement reports are restricted to the Candidate Set, external interference assessment method may prove inaccurate. Accuracy depends on Candidate Set size and load distribution over the network. If cells not belonging to the Active Set are heavily loaded, their contribution may not be negligible. In this case, external interference evaluation based on the Candidate Set could be biased. This problem can be avoided if the report scheme is extended to non-candidate base-stations that bring a substantial amount of interference at the mobile.

Once target SIR, internal and external interference are determined, formula (1) is used to derive the initial transmit power value towards the mobile for the target base-station.

Besides, if the measured SIR over the BCCH channel of the target base-station BS is also reported (optional) to the RNC, then a refined estimate of the orthogonality factor can be obtained. In effect, this SIR is defined as:

$$SIR_{BCCH} = \frac{P_{r, BCCH}}{I_{intra} + I_{extra}} = \frac{P_{r, BCCH}}{\frac{P_{tot,BS}}{PL} \times OF + I_{extra}}$$

From this expression, the orthogonality factor can be extracted as a function of known quantities:

$$OF = (P_{r, BCCH} - I_{extra}) \times \frac{PL}{SIR_{BCCH} \times P_{tot,BS}} \times SIR$$

Thanks to the invention, transmitted power can be accurately tuned to achieve the target SIR. Quality of service is ensured immediately while transmitted power is minimized. Hence, power disturbances usually induced by inaccurate power initialization are avoided. Moreover, the power control is no longer concerned with compensation procedures due to initialization errors and it can focus right away on fast-fading effects counteraction. In fact, transient effects resulting from the activation of new links are minimized.

The "power initialization" procedure according to the invention can be re-used at any time of the communication (using last report) to overcome any malfunctioning of other power control means, e.g the fast-power control loop. In effect, since the closed-loop is an iterative process subject to transmission errors, it could diverge at some point. Then, a power reset procedure is needed and the above solution naturally applies in such situations.

It should also be noted that no signalling overhead is required since the inventive method is solely based on the reporting scheme which supports handover and access.

The present invention also includes a cellular radiocommunication network comprising in particular a plurality of transmitter units E gathered together in several base stations and able to establish communication links with receiver units R, wherein the needed transmission for establishing and/or maintaining a radiocommunication link between a specific transmitter unit $E_i$ and a specific receiver unit $R_j$ is determined according to the method described herein before.

The present invention is, of course, not limited to the preferred embodiment described herein, changes can be made or equivalents used without departing from the scope of the invention.

## Claims

1. Method for determining the needed transmission power for establishing a radio communication link between a transmitter unit ($E_i$) among a plurality of transmitter units (E) gathered together in several geographically spread base stations and a receiver unit ($R_j$) among a plurality of receiver units (R), with a given signal-to-interference ratio ($SIR_{Rj}$) at the receiver unit ($R_j$), wherein the transmission power ($P_t$), especially the initial transmission power ($P_{t,init}$) is calculated as follows:

$$P_t \text{ or } P_{t,init} = SIR_{Rj} \times PL \times (I_{intra} + I_{extra})$$

where:

PL is the pathloss obtained as the ratio between reported received power ($P_{Rj}$) at the receiver unit ($R_j$) and known transmitted power ($P_{ti}$) by the transmitter unit ($E_i$) ;

$I_{intra}$ is the interference power received at the receiver unit ($R_j$) from all other transmitter units ($E_{BS}$) of the base station (BS) comprising the transmitter unit ($E_i$), and,

$I_{extra}$ is the interference power received at the receiver unit ($R_j$) from the transmitter units (E) from all base stations of the network, except the base station (BS) incorporating transmitter unit ($E_i$).

2. Method according to claim 1, wherein the interference power ($I_{intra}$) is calculated as follows:

$$I_{intra} = \frac{P_{tot, BS}}{PL} \times OF_j$$

where:

$P_{tot, BS}$ is the total transmitted power of all transmitter units ($E_{BS}$) of the base station (BS) incorporating transmitter unit ($E_i$);

PL is the pathloss between base station (BS)

and receiver unit ($R_j$), and,

$OF_j$ is the orthogonality factor seen by the receiver unit ($R_j$).

3. Method according to anyone of claim 1 or 2, wherein the interference power $I_{extra}$ is calculated as follows:

$$I_{extra} = \sum_{k} \frac{P_{tot, BS_k}}{PL_{BS_k}}$$

where:

$P_{tot, BS_k}$ is the total transmitted power of all transmitter units (E) of the base stations ($BS_k$) of the network other than the base station (BS) incorporating the transmitter unit ($E_i$), and,

$PL_{BS_k}$ is the corresponding pathloss between receiver unit ($R_j$) and base station ($BS_k$).

4. Method according to claim 3, wherein only the base stations (E) which are received at the receiver unit ($R_j$) with at least a preset minimal power level and are thus part of a base station belonging to a so-called Candidate Set, are taken into account in order to calculate ($I_{extra}$).

5. Method according to anyone of claims 1 to 4, wherein the initial transmission power ($P_{t,init}$), or downlink power, is calculated for each new communication link setup or modification thereof.

6. Method according to anyone of claims 1 to 5, wherein the transmitter units (E) and the receiver units (R) are part of a Code Division Multiple Access (CDMA) type cellular network, controled by a Radio Network Controller (RNC), the receiver units (R) corresponding to the mobile stations.

7. Method according to anyone of claims 1 to 6, wherein the pathloss values (PL) are based on ($P_{Rj}$) and ($P_{ti}$) power values obtained through the Broadcasting Control CHannel (BCCH).

8. Method for evaluating the total interference ($I_{tot}$) received at a specific receiver unit ($R_j$) able to establish communication links with at least one of a plurality of transmitter units (E) gathered together in several base stations (BS) forming a cellular radiocommunication network, wherein :

$$I_{tot} = I_{intra} + I_{extra},$$

with

$$I_{intra} = \frac{P_{tot,\, BS}}{PL} \times OF_j$$

where:

$P_{tot,\, BS}$ is the total transmitted power of all transmitter units ($E_{BS}$) of the base station (BS) incorporating transmitter unit ($E_i$);
PL is the pathloss between base station (BS) and receiver unit ($R_j$), and,
$OF_j$ is the orthogonality factor seen by the receiver unit ($R_j$),

and with :

$$I_{extra} = \sum_k \frac{P_{tot,\, BS_k}}{PL_{\, BS_k}}$$

where:

$P_{tot,\, BS_k}$ is the total transmitted power of all transmitter units (E) of the base stations ($BS_k$) of the network other than the base station (BS) incorporating the transmitter unit ($E_i$), and,
$PL_{\, BS_k}$ is the corresponding pathloss between receiver unit ($R_j$) and base station ($BS_k$).

9. Cellular radiocommunication network comprising in particular a plurality of transmitter units (E) gathered together in several base stations and able to establish communication links with receiver units (R), wherein the needed transmission for establishing and/or maintaining a radiocommunication link between a specific transmitter unit ($E_i$) and a specific receiver unit ($R_j$) is determined according to the method of any of claims 1 to 7.

**European Patent Office**

## EUROPEAN SEARCH REPORT

Application Number

EP 99 44 0155

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 97 07600 A (NOKIA MOBILE PHONES LTD ;SAARIO EIJA (FI)) 27 February 1997 (1997-02-27) * page 3, line 22 - page 5, line 25 * * page 9, line 3 - page 11, line 24 * * figure 1 * | 1,5-7,9 | H04B7/005 |
| Y | | 2-4,8 | |
| Y | J. LAAKSO; R. JÄNTTI; M. RINNE; O. SALONAHO: "Radio Resource Knapsack Packing For WCDMA Air Interface" 9TH IEEE INTL SYMPOSIUM ON PERSONAL, INDOOR AND MOBILE RADIO COMMUNICATIONS, 'Online! vol. 1, 8 - 11 September 1998, pages 183-187, XP002122862 Retrieved from the Internet: <URL:http://iel.ihs.com/> * page 185, column 1, paragraph 2 - page 185, column 2, paragraph 1 * | 2-4,8 | |
| A | X. QIU; K. CHAWLA: "Intra-cell Interference Management for Fixed Broadband Wireless Systems" VEHICULAR TECHNOLOGY CONFERENCE 1998, 48TH IEEE, 'Online! vol. 2, 18 - 21 May 1998, pages 914-919, XP002122861 Retrieved from the Internet: <URL:http://iel.ihs.com/> * page 915, column 2, line 13 - page 916, column 1, line 35 * | 2-4,8 | TECHNICAL FIELDS SEARCHED (Int.Cl.7) H04B |

The present search report has been drawn up for all claims

| Place of search | Date of completion of the search | Examiner |
|---|---|---|
| THE HAGUE | 17 November 1999 | Yang, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 44 0155

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-1999

| Patent document cited in search report | Publication date | Patent family member(s) | Publication date |
|---|---|---|---|
| WO 9707600 A | 27-02-1997 | FI 953902 A<br>AU 6661496 A<br>EP 0872036 A | 19-02-1997<br>12-03-1997<br>21-10-1998 |

EPO FORM P0459

For more details about this annex : see Official Journal of the European Patent Office, No. 12/82